# EUROPEAN PATENT SPECIFICATION

(11) **EP 3 932 185 B1**
(45) Date of publication and mention of the grant of the patent: **04.01.2023**
(21) Application number: 21178988.8
(22) Date of filing: 11.06.2021
(51) Int. Cl.: A01G 9/02, A01G 27/02

(54) **PLANT POT**
PFLANZENTOPF
POT DE FLEURS

(30) Priority: 29.06.2020 TW 109208209 U; 03.06.2021 TW 110206440 U
(43) Date of publication of application: 05.01.2022
(73) Proprietor: Sheng San Co., Ltd., Taichung City 420 (TW)
(72) Inventor: CHANG, Cheng-Chung, 420 TAICHUNG CITY (TW)
(74) Representative: Straus, Alexander

(56) References cited:
- WO-A1-99/35899
- GB-A- 403 460
- GB-A- 2 299 254
- US-A1- 2013 152 467
- US-A1- 2015 096 229

## Description

### BACKGROUND OF THE INVENTION

### 1. Field of the Invention

The present invention relates to plant pots, in particular to a plant pot that can make watering operations more convenient.

### 2. Description of the Related Art

A conventional plant pot generally has the bottom thereof equipped with multiple drainage holes to prevent water from accumulating in the plant pot. When the excess water is drained from the plant pot through the drainage holes, it is easy to drain the planting medium (such as culture soil) in the pot at the same time, which affects the hygiene near the plant pot. Therefore, the user usually lays a non-woven fabric on the bottom of the plant pot before planting and then backfills the planting medium. However, this method of application is troublesome and the connection effect is not good.

In order to solve the above problems, the plant pot disclosed in Taiwan Invention Patent No. 1516200 comprises an accommodation chamber, a perforation provided at the bottom of the accommodation chamber, a water level control tube provided at the perforation, and a high-permeability ceramic board inserted in the accommodation chamber, which divides the accommodation chamber into a planting area and a water storage area, so that the water in the water storage area can penetrate into the planting area, and the excess water is discharged from the water level control tube. However, in the aforementioned design, although the high-permeability ceramic board allows water from the water storage area to penetrate into the planting area and keep the soil moist, the inability to control the water volume of the high-permeability ceramic board causes the plant roots to infiltrate in the moist soil for a long time and have the problem of easy rot. A plant pot is known from document US2013152467A.

### SUMMARY OF THE INVENTION

The present invention has been accomplished under the circumstances in view. It is the main object of the present invention to provide a plant pot, which can prevent the planting medium from leaking out of the plant pot during the watering process, and can make the roots of the plant absorb enough water at the same time to avoid the soil from becoming too moist and moldy, and even the root rotten due to lack of oxygen problem.

To achieve this and other objects of the present invention, a plant pot comprises a pot body, a water pipe and a dividing plate. The pot body comprises a pot bottom and a pot wall. The pot wall is connected to the periphery of the pot bottom, so that the pot wall and the pot bottom surround a planting space together. The pot bottom is provided with a water guide hole. The water pipe is assembled on the pot bottom of the pot body and partially located in the planting space. The water pipe is connected to the water guide hole. The dividing plate is set in the planting space to divide the planting space into a first space and a second space. The dividing plate comprises a plate body, a suction groove and a through hole. The through hole penetrates through opposing top and bottom surfaces of the plate body. The water pipe passes through the through hole. The suction groove extends from the bottom surface of the plate body and is provided with a plurality of cuts that connect the first space and the second space.

It can be seen from the above that the dividing plate divides the planting space of the pot body into a first space on the upper side and a second space on the lower side. The roots of the plants planted in the first space can vertically absorb the liquid (water or culture fluid) stored in the second space through the cuts of the suction groove. The dividing plate separates the planting medium and the liquid in the plant pot, so as to avoid problems such as the soil being too humid and moldy, and even hypoxia can lead to rotten roots, and the leakage of the planting medium.

Preferably, the dividing plate further comprises an opening; the suction groove extends from the periphery of the opening in a direction away from the plate bod; the cuts penetrate opposing inner and outer surfaces of the suction groove at intervals.

Preferably, the pot wall comprises a rear end wall, an annular peripheral wall and two opposing connecting walls. Each connecting wall is connected between the rear end wall and the annular peripheral wall. The pot bottom comprises a positioning groove located on a bottom surface thereof and extending from one of the two connecting walls to the other the connecting wall. The pot wall comprises two opposing positioning protrusions upwardly extended from a top edge thereof. The positioning protrusions are located at the junction of the rear end wall and the connecting walls and correspond to two opposite ends of the positioning groove.

Preferably, the plant pot further comprises a plurality of protruding ribs. The protruding ribs are separately arranged at intervals and located at the junction of the pot wall and the pot bottom. The dividing plate is abutted against the protruding ribs.

Preferably, each connecting wall comprises a straight section and a transverse section. The straight section has one end thereof connected to one end of the rear end wall. The transverse section has one end thereof connected to one end of the annular peripheral wall, and an opposite end thereof connected to an opposite end of the straight section.

Preferably, the rear end wall comprises an inclined surface located at a bottom end thereof.

Preferably, the pot bottom comprises a drain, a tapered guide portion and a retaining wall. The retaining wall is located in the planting space and surrounds the drain. The tapered guide portion is located opposite to the retaining wall. The tapered guide portion is extended from the periphery of the drain in direction away from the pot bottom. The tapered guide portion comprises a water guide hole located on a tip thereof. The dividing plate comprises a first raised portion, that is set in the retaining wall.

Preferably, the pot bottom comprises a water pipe connection part. The water pipe connection part comprises the said water guide hole in communication with the planting space, and a clamping portion adjacent to the water guide hole. The pot bottom comprises a fence wall upwardly extended from a top surface thereof corresponding to the water guide hole. The dividing plate further comprises a second raised portion extended around the through hole and set in the fence wall.

Preferably, the height of the retaining wall is higher than the height of the fence wall.

Preferably, the water pipe is a retractable water pipe. The water pipe comprises an upper pipe member and a lower pipe member connected to each other. The upper pipe member is movable up and down relative to the lower pipe member. The lower pipe member comprises a ring groove corresponding to the clamping portion.

Preferably, the lower pipe member of the water pipe comprises a fixed pipe body, a stop portion and a connection portion. The stop portion and the connection portion are respectively located on both sides of the fixed pipe body. The upper pipe member of the water pipe comprises a movable pipe body, a positioning portion and a tapered portion. The positioning portion and the tapered portion are respectively located on both sides of the movable pipe body. The movable pipe body is arranged on the fixed pipe body and movable up and down between a first position and a second position. The positioning portion is stopped at the stop portion.

Preferably, the connection portion of the lower pipe member comprises two opposite gaps in communication with the ring groove.

The detailed structure, characteristics, assembly or use of the plant pot provided by the present invention will be described in the detailed description of the subsequent preferred embodiment. However, those with ordinary knowledge in the field of the present invention should be able to understand that this detailed description and specific preferred embodiment listed in the implementation of the present invention are only used to illustrate the present invention, not to limit the scope of the patent application of the present invention.

### BRIEF DESCRIPTION OF THE DRAWINGS

FIG. 1 is an oblique top elevational view of a plant pot in accordance with the present invention.
FIG. 2 is a sectional side view of the plant pot in accordance with the present invention.
FIG. 3 is another oblique top elevational view of the plant pot in accordance with the present invention.
FIG. 4 is an oblique bottom elevational view of the plant pot in accordance with the present invention.
FIG. 5 is an oblique bottom elevational view of the dividing plate of the plant pot in accordance with the present invention.
FIG. 6 is an exploded view of the plant pot in accordance with the present invention.

### DETAILED DESCRIPTION OF THE INVENTION

The applicant first states here that in the entire specification, including the preferred embodiment described below and the claims in the scope of patent application, the terms related to directionality are based on the directions in the drawings. Secondly, in the preferred embodiment and drawings to be described below, the same element numbers represent the same or similar elements or their structural features.

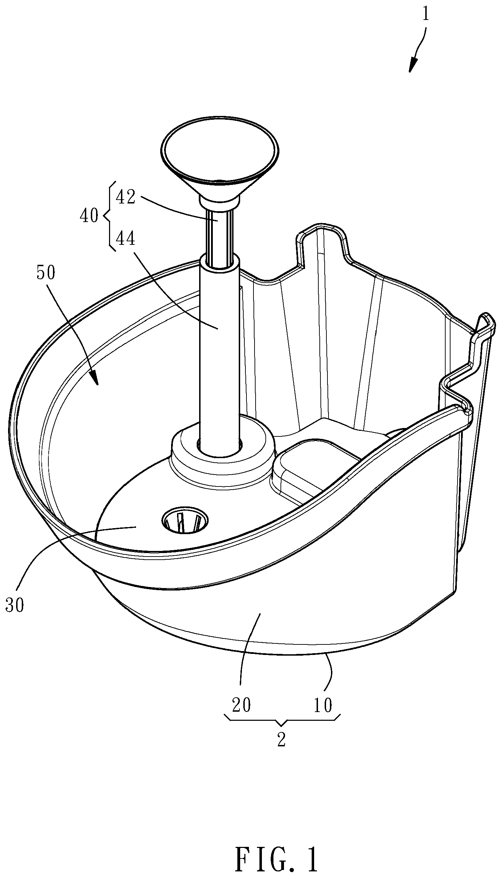

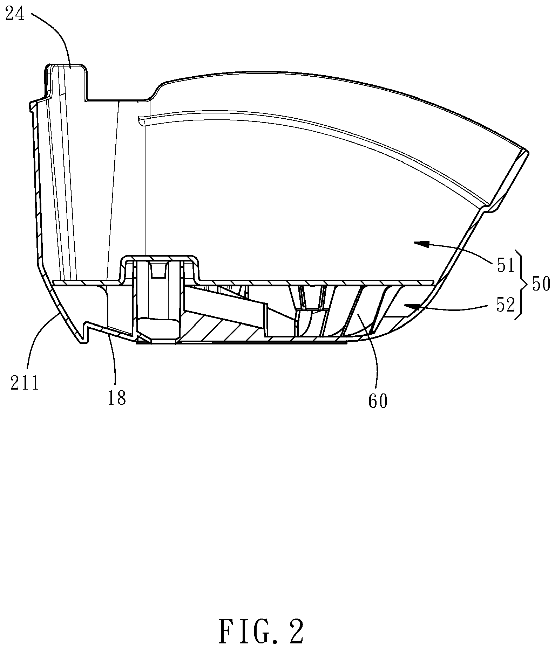

Please refer to FIGS. 1-3, a plant pot **1** in accordance with the present invention comprises a pot body **2,** a dividing plate **30** and a water pipe **40,** the pot body **2** further comprises a pot bottom **10** and a pot wall **20.** The pot wall **20** is integrally connected to the periphery of the pot bottom **10,** so that the pot wall **20** and the pot bottom **10** surround a planting space **50** for storing liquid (such as water or culture solution). The dividing plate **30** is set in the planting space **50** and divides the planting space **50** into a first space **51** and a second space **52.** The first space **51** is located above the dividing plate **30** and is used to accommodate the planting medium. The second space **52** is located below the dividing plate **30** and is used to store water or culture fluid.

The pot wall **20** comprises a rear end wall **21**, an annular peripheral wall **22** and two opposite connecting walls **23**. The rear end wall **21** is provided with an inclined surface **211** at the bottom of the outer peripheral surface thereof. When the plant pot **1** is installed on a bracket (not shown in the drawing), the inclined surface **211** can avoid interference between the rear end wall **21** and one of the lower beams of the bracket. The two connecting walls **23** are respectively connected between the rear end wall **21** and the annular peripheral wall **22**.

More specifically, the connecting wall **23** comprises a straight section **231** and a transverse section **232**. One end of the straight section **231** is integrally connected to one end of the rear end wall **21**, and one end of the transverse section **232** is integrally connected to one end of the annular peripheral wall **22**. The other end of the straight section **231** and the other end of the transverse section **232** are integrally connected to each other. In addition, the pot wall 20 further comprises two positioning protrusions **24** arranged at intervals and opposite to each other for clamping on the upper beam of the bracket. The two positioning protrusions **24** are located at the junction of the rear end wall **21** and the two connecting walls **23**. Furthermore, each positioning protrusion **24** extends upward from the top edge of the pot wall **20**, and has a first positioning section **241** and a second positioning section **242**. The first positioning section **241** and the second positioning section **242** are connected to each other. The first positioning section **241** is located at the top edge of the rear end wall **21**. The second positioning section **242** is located at the top edge of the straight section **231** of the connecting wall **23**.

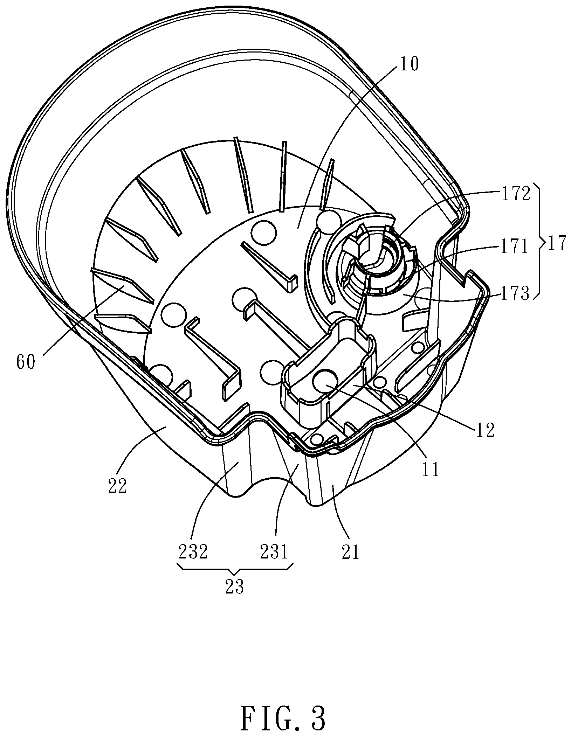

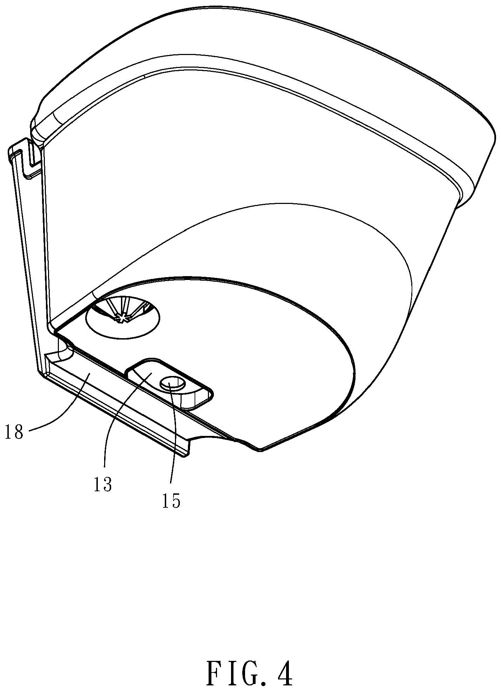

The pot bottom **10** comprises a drain **11** penetrating opposing top and bottom surfaces thereof, and a tapered guide portion **13** integrally extended downward from the periphery of the drain **11**, as shown in FIG. 4. The tip of the tapered guide portion **13** protrudes from the bottom surface of the pot bottom **10** through the drain **11** and has a water guide hole **15** connected to the planting space **50** to concentrate the liquid (water or culture fluid) flowing out of the planting space **50**. As shown in FIG. 3, the top surface of the pot bottom **10** extends upwards along the periphery of the tapered guide portion **13** with a retaining wall **12**. In addition, the top surface of the pot bottom **10** has a water pipe connection part **17** for the assembly of the water pipe **40**, so that the water pipe **40** can inject liquid into the planting space **50**. The water pipe connection part **17** comprises a water guide hole **171** penetrating the top and bottom surfaces of the pot bottom **10**, a clamping portion **172** adjacent to the water guide hole **171**, and a fence wall **173** corresponding to the water guide hole **171.** The water guide hole **171** connects to the planting space **50.** The fence wall **173** extends upwards from the top surface of the pot bottom **10.** The height of the retaining wall **12** is higher than the height of the fence wall **173.** When the water level of water or culture fluid is higher than the height of the fence wall **173** and the retaining wall **12,** the excess water or culture fluid will be discharged from the planting space **50** through the water guide hole **171** and the drain **11**. Furthermore, another situation is that when the water guide hole **171** is blocked and the water or culture fluid cannot be discharged or flowed to the next plant pot (not shown), the excess water or culture fluid will be discharged from the planting space **50** through the drain **11**.

The plant pot **1** of the present invention further comprises a plurality of protruding ribs **60**, which are arranged at the junction of the bottom end of the inner peripheral surface of the pot wall **20** and the top surface of the pot bottom **10** in an evenly spaced arrangement, and are used for the assembly of the dividing plate **30**. It also has the function of increasing the overall structural strength. In addition, the pot bottom **10** further comprises a positioning groove **18** for clamping on the lower beam of the bracket. The positioning groove **18** is located at the rear end of the bottom surface of the pot bottom **10** and adjacent to the inclined surface **211**. The positioning groove **18** extends from the straight section **231** of one connecting wall **23** to the straight section **231** of the other connecting wall **23**. The two opposite ends of the positioning groove **18** respectively correspond to the two positioning protrusions **24** of the pot wall **20**.

In the preferred embodiment of the present invention, the water pipe **40** is a retractable water pipe **40** as an example, and comprises an upper pipe member **42** and a lower pipe member **44** for conveying water or culture fluid to the planting space **50**. In detail, the upper pipe member **42** is displaced up and down relative to the lower pipe member **44**. The upper part of the upper pipe member **42** is located outside the planting space **50**. The lower part of the lower pipe member **44** is located in the planting space **50**. The upper pipe member **42** comprises a movable pipe body **421**, a positioning portion **422** and a tapered portion **423**. The positioning portion **422** and the tapered portion **423** are respectively located on both sides of the movable pipe body **421**. The lower pipe member **44** comprises a fixed pipe body **441**, a stop portion **442** and a connection portion **443**. The stop portion **442** and the connection portion **443** are respectively located on both sides of the fixed pipe body **44**. The connection portion **443** comprises a ring groove **444** corresponding to the clamping portion **172** of the water pipe connection part **17** and a gap **445** communicating with the ring groove **444**. When the movable pipe body **421** is connected to the fixed pipe body **441**, the movable pipe body **421** can be moved up and down between a first position and a second position. When in the first position, the movable pipe body **421** is inserted into the fixed pipe body **441**. When in the second position, the movable pipe body **421** is far away from the fixed pipe body **441**. At this time, the positioning portion **422** and the stop portion **442** are embedded in each other to prevent the upper pipe member **42** from separating from the lower pipe member **44**, and the ring groove **444** of the lower pipe member **44** is embedded in the clamping portion **172** of the pot bottom **10** to generate a positioning effect, and radial shrinkage is generated through the gap **445**, so that the water pipe **40** can be easily assembled in the water pipe connection part **17** and connected to the water guide hole **171**.

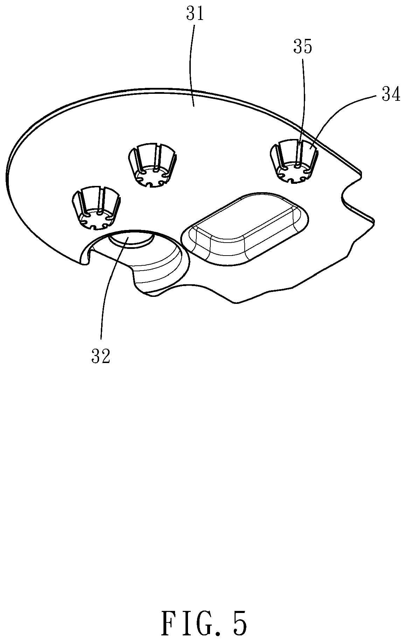

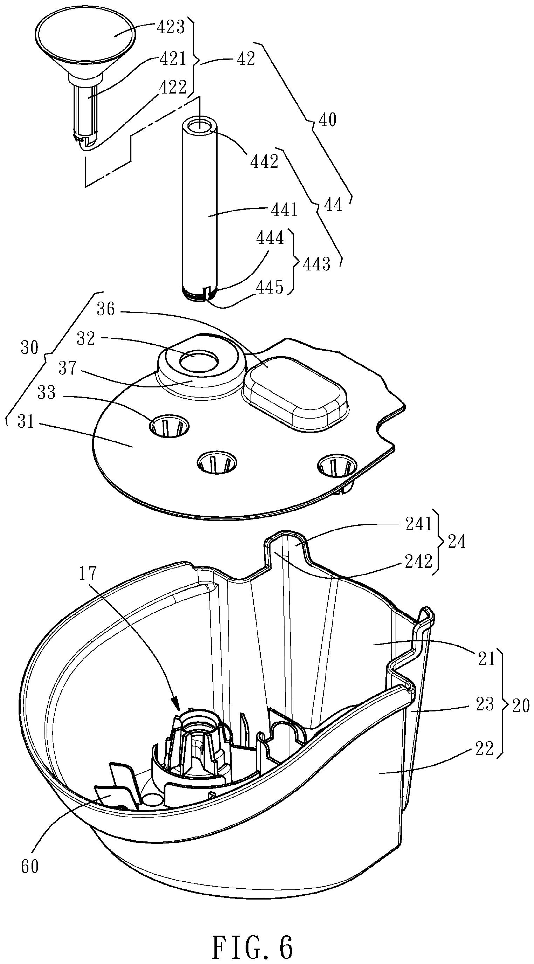

Please refer to FIGS. 4-6, the dividing plate **30** of the preferred embodiment of the present invention comprises a plate body **31**, and a through hole **32** penetrating the top and bottom surfaces of the plate body **31** to allow the lower pipe member **44** located in the planting space **50** to pass through and be engaged with the water pipe connection part **17** of the pot bottom **10**. In addition, the plate body **31** further comprises three openings **33** penetrating through the plate body **31** (in this embodiment, three are taken as an example, but not limited to this). The bottom surface of the plate body **31** integrally extends downward from the periphery of each opening **33** with a suction groove **34**. The suction grooves **34** protrude from the bottom surface of the plate body **31** in the shape of a truncated cone to increase the contact area with the liquid in the second space **52.** A plurality of cuts **35** are spaced and perpendicularly penetrate the inner and outer surfaces of each suction groove **34**, and connect the first space **51** and the second space **52**. The top surface of the dividing plate **30** is protruded with a first raised portion **36** and a second raised portion **37**. The configuration and location of the first raised portion **36** correspond to the configuration and location of the retaining wall **12**. The second raised portion **37** is ringed around the periphery of the through hole **32** of the dividing plate **30**, and its configuration and location correspond to the configuration and location of the fence wall **173**. Set the dividing plate **30** on the protruding ribs **60** to attach the first raised portion **36** onto the retaining wall **12** to cover the drain **11**, and also to attach the second raised portion **37** onto the fence wall **173** to cover the water guide hole **171**, then assemble the dividing plate **30** in the planting space **50**.

It can be seen from the above that the dividing plate **30** of the present invention has a special structure, which enables it to be quickly assembled in the planting space **50,** dividing the planting space **50** into a first space **51** and a second space **52.** Through the cuts **35** of the suction grooves **34**, the roots of the plants in the first space **51** can effectively absorb the water and culture fluid in the second space **52** without being soaked for a long time, so as to prevent the planting medium from clogging the water guide hole **171** and the drain **11.** At the same time, it solves the problem of planting medium leakage and soiling the surrounding environment.

## Claims

1. A plant pot (1), comprising:
a pot body (2) comprising a pot bottom (10) and a pot wall (20), said pot wall (20) being connected to the periphery of said pot bottom (10) and surrounding a planting space (50) together, said pot bottom (10) being provided with a water guide hole (171);
a water pipe (40) assembled on said pot bottom (10) of said pot body (2) and partially located in said planting space (50), said water pipe (40) being connected to said water guide hole (171); characterised is that,
a dividing plate (30) set in said planting space (50) to divide said planting space (50) into a first space (51) and a second space (52), said dividing plate (30) comprising a plate body (31), a suction groove (34) and a through hole (32), said through hole (32) penetrating through opposing top and bottom surfaces of said plate body (31), said water pipe (40) passing through said through hole (32), said suction groove (34) extending from the bottom surface of said plate body (31) and being provided with a plurality of cuts (35) that connect said first space (51) and said second space (52).

2. The plant pot (1) as claimed in claim 1, wherein said dividing plate (30) further comprises an opening (33); said suction groove (34) extends from the periphery of said opening (33) in a direction away from said plate body (31); said cuts (35) penetrate opposing inner and outer surfaces of said suction groove (34) at intervals.

3. The plant pot (1) as claimed in claim 1, wherein said pot wall (20) comprises a rear end wall (21), an annular peripheral wall (22) and two opposing connecting walls (23), each said connecting wall (23) being connected between said rear end wall (21) and said annular peripheral wall (22); said pot bottom (10) comprises a positioning groove (18) located on a bottom surface thereof and extending from one said connecting wall (23) to the other said connecting wall (23); said pot wall (20) comprises two opposing positioning protrusions (24) upwardly extended from a top edge thereof, said positioning protrusions (24) being located at the junction of said rear end wall (21) and said connecting walls (23) and corresponding to two opposite ends of said positioning groove (18).

4. The plant pot (1) as claimed in claim 1 or 3, wherein said plant pot (1) further comprises a plurality of protruding ribs (60), said protruding ribs (60) being separately arranged at intervals and located at the junction of said pot wall (20) and said pot bottom (10); said dividing plate (30) is abutted against said protruding ribs (60).

5. The plant pot (1) as claimed in claim 3, wherein each said connecting wall (23) comprises a straight section (231) and a transverse section (232), said straight section (231) having one end thereof connected to one end of said rear end wall (21), said transverse section (232) having one end thereof connected to one end of said annular peripheral wall (22) and an opposite end thereof connected to an opposite end of said straight section (231).

6. The plant pot (1) as claimed in claim 3, wherein said rear end wall (21) comprises an inclined surface (211) located at a bottom end thereof.

7. The plant pot (1) as claimed in claim 1, wherein said pot bottom (10) comprises a drain (11), a tapered guide portion (13) and a retaining wall (12), said retaining wall (12) being located in said planting space (50) and surrounding said drain (11), said tapered guide portion (13) being located opposite to said retaining wall (12), said tapered guide portion (13) being extended from the periphery of said drain (11) in direction away from said pot bottom (10), said tapered guide portion (13) comprising a water guide hole (15) located on a tip thereof; said dividing plate (30) comprises a first raised portion (36), said first raised portion (36) being set in said retaining wall (12).

8. The plant pot (1) as claimed in claim 1 or 7, wherein said pot bottom (10) comprises a water pipe connection part (17), said water pipe connection part (17) comprising said water guide hole (171) in communication with said planting space (50) and a clamping portion (172) adjacent to said water guide hole (171); said pot bottom (10) comprises a fence wall (173) upwardly extended from a top surface thereof corresponding to said water guide hole (171); said dividing plate (30) further comprises a second raised portion (37) extended around said through hole (32) and set in said fence wall (173).

9. The plant pot (1) as claimed in claim 7, wherein the height of said retaining wall (12) is higher than the height of said fence wall (173).

10. The plant pot (1) as claimed in claim 8, wherein said water pipe (40) is a retractable water pipe (40), said water pipe (40) comprising an upper pipe member (42) and a lower pipe member (44) connected to each other, said upper pipe member (42) being movable up and down relative to said lower pipe member (44), said lower pipe member (44) comprising a ring groove (444) corresponding to said clamping portion (172).

11. The plant pot (1) as claimed in claim 10, wherein said lower pipe member (44) of said water pipe (40) comprises a fixed pipe body (441), a stop portion (442) and a connection portion (443), said stop portion (442) and said connection portion (443) being respectively located on both sides of said fixed pipe body (441); said upper pipe member (42) of said water pipe (40) comprises a movable pipe body (421), a positioning portion (422) and a tapered portion (423), said positioning portion (422) and said tapered portion (423) being respectively located on both sides of said movable pipe body (421), said movable pipe body (421) being arranged on said fixed pipe body (441) and movable up and down between a first position and a second position, said positioning portion (422) being stopped at said stop portion (442).

12. The plant pot (1) as claimed in claim 11, wherein said connection portion (443) of said lower pipe member (44) comprises two opposite gaps (445) in communication with said ring groove (444).

## Patentansprüche

1. Pflanztopf (1), welcher umfasst:
einen Topfkörper (2) mit einem Topfboden (10) und einer Topfwand (20), worin die Topfwand (20) mit dem Umfang des Topfbodens (10) verbunden ist und zusammen einen Pflanzraum (50) umgibt, worin der Topfboden (10) mit einem Wasserführungsloch (171) versehen ist;
ein Wasserrohr (40), das an dem Topfboden (10) des Topfkörpers (2) angebracht ist und sich teilweise in dem Pflanzraum (50) befindet, worin das Wasserrohr (40) mit dem Wasserführungsloch (171) verbunden ist;
**dadurch gekennzeichnet, dass**
eine Teilungsplatte (30) in den Pflanzraum (50) eingesetzt ist, um den Pflanzraum (50) in einen ersten Raum (51) und einen zweiten Raum (52) zu unterteilen, worin die Teilungsplatte (30) einen Plattenkörper (31), eine Saugnut (34) und ein Durchgangsloch (32) umfasst, worin das Durchgangsloch (32) durch abgewandte obere und untere Oberflächen des Plattenkörpers (31) hindurchdringt, das Wasserrohr (40) durch das Durchgangsloch (32) verläuft, die Saugnut (34) sich von der Bodenfläche des Plattenkörpers (31) erstreckt und mit mehreren Einschnitten (35) versehen ist, die den ersten Raum (51) und den zweiten Raum (52) verbinden.

2. Pflanztopf (1) nach Anspruch 1, worin die Trennplatte (30) ferner eine Öffnung (33) aufweist; die Saugnut (34) sich vom Umfang der Öffnung (33) in einer Richtung weg von dem Plattenkörper (31) erstreckt; und die Einschnitte (35) in Intervallen abgewandte innere und äußere Oberflächen der Saugnut (34) durchdringen.

3. Pflanztopf (1) nach Anspruch 1, worin die Topfwand (20) eine hintere Endwand (21), eine ringförmige Umfangswand (22) und zwei gegenüberliegende Verbindungswände (23) umfasst, worin jede der Verbindungswände (23) zwischen der hinteren Endwand (21) und der ringförmigen Umfangswand (22) verbunden ist; der Topfboden (10) eine Anordnungsnut (18) umfasst, die sich auf einer Bodenfläche desselben befindet und sich von einer der Verbindungswände (23) zu der anderen Verbindungswand (23) erstreckt; und die Topfwand (20) zwei gegenüberliegende Anordnungsvorsprünge (24) aufweist, die sich von einer Oberkante derselben nach oben erstrecken, worin die Anordnungsvorsprünge (24) an der Verbindung der hinteren Endwand (21) und der Verbindungswände (23) angeordnet sind und zwei gegenüberliegenden Enden der Anordnungsnut (18) entsprechen.

4. Pflanztopf (1) nach Anspruch 1 oder 3, worin der Pflanztopf (1) ferner mehrere vorstehende Rippen (60) umfasst, worin die vorstehenden Rippen (60) separat in Abständen angeordnet sind und sich an der Verbindung der Topfwand (20) und des Topfbodens (10) befinden; und worin die Trennplatte (30) an den vorstehenden Rippen (60) anliegt.

5. Pflanztopf (1) nach Anspruch 3, worin jede Verbindungswand (23) einen geraden Abschnitt (231) und einen Querabschnitt (232) umfasst, worin ein Ende des geraden Abschnitts (231) mit einem Ende der hinteren Endwand (21) verbunden ist, und worin ein Ende des Querabschnitts (232) mit einem Ende der ringförmigen Umfangswand (22) verbunden ist und ein gegenüberliegendes Ende mit einem gegenüberliegenden Ende des geraden Abschnitts (231) verbunden ist.

6. Pflanztopf (1) nach Anspruch 3, worin die hintere Endwand (21) eine geneigte Fläche (211) aufweist, die sich an ihrem unteren Ende befindet.

7. Pflanztopf (1) nach Anspruch 1, worin der Topfboden (10) einen Abfluss (11), einen sich verjüngenden Führungsabschnitt (13) und eine Rückhaltewand (12) umfasst, worin die Rückhaltewand (12) in dem Pflanzraum (50) angeordnet ist und den Abfluss (11) umgibt, worin der sich verjüngende Führungsabschnitt (13) gegenüber der Rückhaltewand (12) angeordnet ist, worin sich der sich verjüngende Führungsabschnitt (13) von der Peripherie des Abflusses (11) in Richtung weg von dem Topfboden (10) erstreckt, worin der sich verjüngende Führungsabschnitt (13) ein Wasserführungsloch (15) aufweist, das an einer Spitze davon angeordnet ist; und die Trennplatte (30) einen ersten erhabenen Abschnitt (36) aufweist, worin der erste erhabene Abschnitt (36) in die Rückhaltewand (12) eingesetzt ist.

8. Pflanztopf (1) nach Anspruch 1 oder 7, worin der Topfboden (10) ein Wasserrohrverbindungsteil (17) umfasst, worin das Wasserrohrverbindungsteil (17) das Wasserführungsloch (171) in Verbindung mit dem Pflanzraum (50) und einen Klemmabschnitt (172) angrenzend an das Wasserführungsloch (171) umfasst; der Topfboden (10) eine Zaunwand (173) umfasst, die sich von einer Oberseite desselben entsprechend dem Wasserführungsloch (171) nach oben erstreckt; und die Trennplatte (30) ferner einen zweiten erhöhten Abschnitt (37) umfasst, der sich um das Durchgangsloch (32) herum erstreckt und in die Zaunwand (173) eingesetzt ist.

9. Pflanztopf (1) nach Anspruch 7, worin die Höhe der Stützmauer (12) höher ist als die Höhe der Zaunmauer (173).

10. Pflanztopf (1) nach Anspruch 8, worin das Wasserrohr (40) ein einziehbares Wasserrohr (40) ist, worin das Wasserrohr (40) ein oberes Rohrelement (42) und ein unteres Rohrelement (44) umfasst, die miteinander verbunden sind, worin das obere Rohrelement (42) relativ zu dem unteren Rohrelement (44) nach oben und unten bewegt werden kann, worin das untere Rohrelement (44) eine Ringnut (444) umfasst, die dem Klemmabschnitt (172) entspricht.

11. Pflanztopf (1) nach Anspruch 10, worin das untere Rohrelement (44) der Wasserleitung (40) einen festen Rohrkörper (441), einen Stoppabschnitt (442) und einen Verbindungsabschnitt (443) umfasst, worin der Stoppabschnitt (442) und der Verbindungsabschnitt (443) jeweils auf beiden Seiten des festen Rohrkörpers (441) angeordnet sind; das obere Rohrelement (42) der Wasserleitung (40) einen beweglichen Rohrkörper (421), einen Anordnungsabschnitt (422) und einen sich verjüngenden Abschnitt (423) umfasst, worin der Anordnungsabschnitt (422) und der sich verjüngende Abschnitt (423) jeweils auf beiden Seiten des beweglichen Rohrkörpers (421) angeordnet sind, der bewegliche Rohrkörper (421) auf dem festen Rohrkörper (441) angeordnet ist und zwischen einer ersten Position und einer zweiten Position auf- und abbewegt werden kann und der Anordnungsabschnitt (422) an dem Stoppabschnitt (442) angehalten wird.

12. Pflanztopf (1) nach Anspruch 11, worin der Verbindungsabschnitt (443) des unteren Rohrelements (44) zwei gegenüberliegende Lücken (445) aufweist, die mit der Ringnut (444) in Verbindung stehen.

## Revendications

1. Pot de plante (1), comprenant:
un corps de pot (2) comprenant un fond de pot (10) et une paroi de pot (20), ladite paroi de pot (20) étant reliée à la périphérie dudit fond de pot (10) et entourant ensemble un espace de plantation (50), ledit fond de pot (10) étant pourvu d'un trou de guidage d'eau (171);
un tuyau d'eau (40) assemblé sur ledit fond de pot (10) dudit corps de pot (2) et partiellement situé dans ledit espace de plantation (50), ledit tuyau d'eau (40) étant relié audit trou de guidage d'eau (171);
**caractérisé en ce que**
une plaque de séparation (30) placée dans ledit espace de plantation (50) pour diviser ledit espace de plantation (50) en un premier espace (51) et un second espace (52), ladite plaque de séparation (30) comprenant un corps de plaque (31), une rainure d'aspiration (34) et un trou traversant (32), ledit trou traversant (32) pénétrant à travers les surfaces supérieure et inférieure opposées dudit corps de plaque (31), ledit tuyau d'eau (40) passant à travers ledit trou traversant (32), ladite rainure d'aspiration (34) s'étendant depuis la surface inférieure dudit corps de plaque (31) et étant pourvue d'une pluralité de coupures (35) qui relient ledit premier espace (51) et ledit second espace (52).

2. Pot de plante (1) selon la revendication 1, dans lequel ladite plaque de séparation (30) comprend en outre une ouverture (33); ladite rainure d'aspiration (34) s'étend depuis la périphérie de ladite ouverture (33) dans une direction s'éloignant dudit corps de plaque (31); lesdites découpes (35) pénètrent dans les surfaces intérieure et extérieure opposées de ladite rainure d'aspiration (34) à intervalles.

3. Pot de plante (1) selon la revendication 1, dans lequel ladite paroi de pot (20) comprend une paroi d'extrémité arrière (21), une paroi périphérique annulaire (22) et deux parois de connexion opposées (23), chaque dite paroi de connexion (23) étant connectée entre ladite paroi d'extrémité arrière (21) et ladite paroi périphérique annulaire (22); ledit fond de pot (10) comprend une rainure de positionnement (18) située sur une surface de fond de celui-ci et s'étendant d'une dite paroi de connexion (23) à l'autre dite paroi de connexion (23); ladite paroi de pot (20) comprend deux saillies de positionnement opposées (24) s'étendant vers le haut depuis un bord supérieur de celle-ci, lesdites saillies de positionnement (24) étant situées à la jonction de ladite paroi d'extrémité arrière (21) et desdites parois de connexion (23) et correspondant à deux extrémités opposées de ladite rainure de positionnement (18).

4. Pot de plante (1) selon la revendication 1 ou 3, dans lequel ledit pot de plante (1) comprend en outre une pluralité de nervures saillantes (60), lesdites nervures saillantes (60) étant disposées séparément à intervalles et situées à la jonction de ladite paroi de pot (20) et dudit fond de pot (10); ladite plaque de séparation (30) est en butée contre lesdites nervures saillantes (60).

5. Pot de plante (1) selon la revendication 3, dans lequel chacune desdites parois de connexion (23) comprend une section droite (231) et une section transversale (232), ladite section droite (231) ayant une de ses extrémités connectée à une extrémité de ladite paroi d'extrémité arrière (21), ladite section transversale (232) ayant une de ses extrémités connectée à une extrémité de ladite paroi périphérique annulaire (22) et une de ses extrémités opposées connectée à une extrémité opposée de ladite section droite (231).

6. Pot de plante (1) selon la revendication 3, dans lequel ladite paroi d'extrémité arrière (21) comprend une surface inclinée (211) située à une extrémité inférieure de celle-ci.

7. Pot de plante (1) selon la revendication 1, dans lequel ledit fond de pot (10) comprend un drain (11), une partie de guidage conique (13) et une paroi de retenue (12), ladite paroi de retenue (12) étant située dans ledit espace de plantation (50) et entourant ledit drain (11), ladite partie de guidage conique (13) étant située à l'opposé de ladite paroi de retenue (12), ladite partie de guidage conique (13) s'étendant depuis la périphérie dudit drain (11) dans une direction s'éloignant dudit fond de pot (10), ladite partie de guidage conique (13) comprenant un trou de guidage d'eau (15) situé sur une extrémité de celle-ci; ladite plaque de séparation (30) comprend une première partie surélevée (36), ladite première partie surélevée (36) étant placée dans ladite paroi de retenue (12).

8. Pot de plante (1) selon la revendication 1 ou 7, dans lequel ledit fond de pot (10) comprend une partie de connexion de tuyau d'eau (17), ladite partie de connexion de tuyau d'eau (17) comprenant ledit trou de guidage d'eau (171) en communication avec ledit espace de plantation (50) et une partie de serrage (172) adjacente audit trou de guidage d'eau (171); ledit fond de pot (10) comprend une paroi de clôture (173) s'étendant vers le haut à partir d'une surface supérieure de celui-ci correspondant audit trou de guidage d'eau (171); ladite plaque de séparation (30) comprend en outre une seconde partie surélevée (37) s'étendant autour dudit trou traversant (32) et fixée dans ladite paroi de clôture (173).

9. Pot de plante (1) selon la revendication 7, dans lequel la hauteur de ladite paroi de retenue (12) est supérieure à la hauteur de ladite paroi de clôture (173).

10. Pot de plante (1) selon la revendication 8, dans lequel ledit tuyau d'eau (40) est un tuyau d'eau rétractable (40), ledit tuyau d'eau (40) comprenant un élément de tuyau supérieur (42) et un élément de tuyau inférieur (44) reliés l'un à l'autre, ledit élément de tuyau supérieur (42) étant mobile vers le haut et vers le bas par rapport audit élément de tuyau inférieur (44), ledit élément de tuyau inférieur (44) comprenant une rainure annulaire (444) correspondant à ladite partie de serrage (172).

11. Pot de plante (1) selon la revendication 10, dans lequel ledit élément de tuyau inférieur (44) dudit tuyau d'eau (40) comprend un corps de tuyau fixe (441), une partie d'arrêt (442) et une partie de connexion (443), ladite partie d'arrêt (442) et ladite partie de connexion (443) étant respectivement situées des deux côtés dudit corps de tuyau fixe (441); ledit élément de tuyau supérieur (42) dudit tuyau d'eau (40) comprend un corps de tuyau mobile (421), une partie de positionnement (422) et une partie conique (423), ladite partie de positionnement (422) et ladite partie conique (423) étant respectivement situées des deux côtés dudit corps de tuyau mobile (421), ledit corps de tuyau mobile (421) étant disposé sur ledit corps de tuyau fixe (441) et mobile vers le haut et vers le bas entre une première position et une seconde position, ladite partie de positionnement (422) étant arrêtée au niveau de ladite partie d'arrêt (442).

12. Pot de plante (1) selon la revendication 11, dans lequel ladite partie de connexion (443) dudit élément de tuyau inférieur (44) comprend deux espaces opposés (445) en communication avec ladite rainure annulaire (444).
